(19) Europäisches Patentamt / European Patent Office / Office européen des brevets

(11) EP 3 346 285 A1

# (12) EUROPEAN PATENT APPLICATION

published in accordance with Art. 153(4) EPC

(43) Date of publication:
**11.07.2018 Bulletin 2018/28**

(21) Application number: **15902956.0**

(22) Date of filing: **31.08.2015**

(51) Int Cl.:
***G01S 7/487*** *(2006.01)* ***G01S 17/89*** *(2006.01)*

(86) International application number:
**PCT/JP2015/074685**

(87) International publication number:
**WO 2017/037834 (09.03.2017 Gazette 2017/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Pioneer Corporation**
**Tokyo 113-0021 (JP)**

(72) Inventors:
- **ABE, Yoshinori**
  **Kawasaki-shi**
  **Kanagawa 212-0031 (JP)**
- **KITANO, Kazutoshi**
  **Saitama 350-8555 (JP)**

(74) Representative: **Viering, Jentschura & Partner mbB**
**Patent- und Rechtsanwälte**
**Am Brauhaus 8**
**01099 Dresden (DE)**

## (54) INFORMATION PROCESSING DEVICE, CONTROL METHOD, PROGRAM, AND STORAGE MEDIUM

(57) A LIDAR unit 100 generates polar coordinate space frames Fp from segment signals Sseg of segments prior to conversion to point group information. The LIDAR unit 100 then generates an averaged frame Fa in which the polar coordinate space frames Fp are averaged along a temporal direction, and displays on a display 4 an orthogonal coordinate space frame Fo in which the averaged frame Fa is coordinate-converted to an orthogonal coordinate space.

FIG. 4

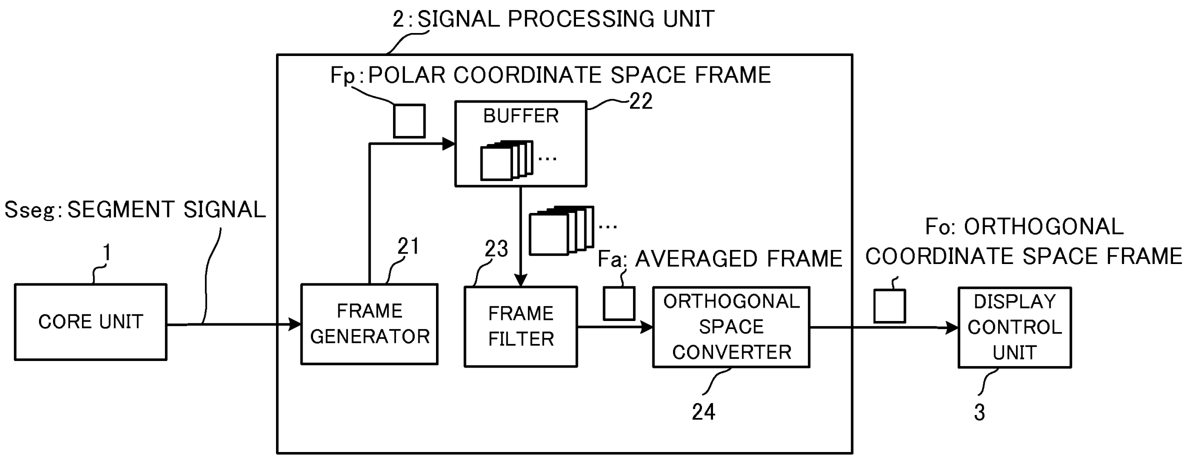




Printed by Jouve, 75001 PARIS (FR)

## Description

### TECHNICAL FIELD

The present invention relates to a technology for ranging.

### BACKGROUND TECHNIQUE

Conventionally, there is known a method for measuring the distance to a peripheral object. For example, Patent Reference-1 discloses a LIDAR which detects a point group of the surface of an object by scanning the horizontal direction with intermittently emitted laser light and by receiving the reflected laser light.
Patent Reference-1: Japanese Patent Application Laid-open under No. 2014-106854

### DISCLOSURE OF INVENTION

### PROBLEM TO BE SOLVED BY THE INVENTION

Generally, a conventional LIDAR detects the peak position of the received pulse with respect to each outgoing direction in the horizontal direction to thereby measure the distance based on the delay time to the peak position. However, in such a case that the peak level of the received pulse is lower than or equivalent to the noise, it cannot properly detect the peak position. As a result, it cannot detect a point group corresponding to an object situated in the distance.
The above is an example of the problem to be solved by the present invention. An object of the present invention is to provide an information processing device capable of suitably outputting a ranging result of an object situated within the measuring range.

### MEANS FOR SOLVING THE PROBLEM

One invention is an information processing device including: an emitting unit configured to emit laser light while changing an outgoing direction of the laser light; a light receiving unit configured to receive the laser light reflected by an object; and an output unit configured to generate and output, on a basis of a light receiving signal outputted by the light receiving unit, first information which indicates received light intensity of the laser light with respect to the outgoing direction and a reply delay time of the reflected laser light.
Another invention is an information processing device including: an emitting unit configured to emit laser light while changing an outgoing direction of the laser light; a light receiving unit configured to receive the laser light reflected by an object; a generation unit configured to generate a two dimensional signal in a polar coordinate system based on a light receiving signal outputted by the light receiving unit with respect to each outgoing direction of the laser light; and a conversion unit configured to convert the two dimensional signal in the polar coordinate system to a two dimensional signal in an orthogonal coordinate system.
Still another invention is an information processing device including: an emitting unit configured to emit laser light while changing an outgoing direction of the laser light; a light receiving unit configured to receive the laser light reflected by an object; an output unit configured to generate and output, on a basis of a light receiving signal outputted by the light receiving unit, first information which indicates received light intensity of the laser light with respect to the outgoing direction and a distance in the outgoing direction from a reference position relating to an emitting position.
Still another invention is a control method executed by an information processing device, the information processing device including an emitting unit and a light receiving unit, the emitting unit configured to emit laser light while changing an outgoing direction of the laser light, the light receiving unit configured to receive the laser light reflected by an object, the control method including an output process to generate and output, on a basis of a light receiving signal outputted by the light receiving unit, first information which indicates received light intensity of the laser light with respect to the outgoing direction and a reply delay time of the reflected laser light.
Still another invention is a program executed by a computer, the computer controlling an information processing device, the information processing device including an emitting unit and a light receiving unit, the emitting unit configured to emit laser light while changing an outgoing direction of the laser light, the light receiving unit configured to receive the laser light reflected by an object, the program making the computer function as an output unit configured to generate and output, on a basis of a light receiving signal outputted by the light receiving unit, first information which indicates received light intensity of the laser light with respect to the outgoing direction and a reply delay time of the reflected laser light.

BRIEF DESCRIPTION OF THE DRAWINGS

FIG. 1 illustrates a schematic configuration of a LIDAR unit.
FIG. 2 illustrates a block diagram of a core unit.
FIG. 3 illustrates waveforms of a trigger signal and a segment extraction signal.
FIG. 4 illustrates a block configuration of a signal processing unit.
FIG. 5A is a plane view schematically illustrating surroundings of the LIDAR unit. FIG. 5B illustrates a polar coordinate space frame corresponding to FIG. 5A.
FIG. 6 illustrates an averaged frame in which time-series sixteen of polar coordinate space frames are averaged.
FIG. 7 illustrates an orthogonal coordinate space frame generated from the polar coordinate space frame.
FIG. 8 illustrates an orthogonal coordinate space frame generated from an averaged frame.
FIGS. 9A to 9C illustrate the intensity of received light at the segment with the index "s = 250".
FIGS. 10A and 10B illustrate the intensity of received light at the segment with the index "s = 0".
FIG. 11 plots on the orthogonal coordinate system point groups of objects detected by a typical LIDAR.
FIG. 12 illustrates a schematic configuration of the signal processing unit according to the first modification.

DETAILED DESCRIPTION OF THE PREFERRED EMBODIMENTS

According to a preferable embodiment of the present invention, an information processing device includes an emitting unit configured to emit laser light while changing an outgoing direction of the laser light; a light receiving unit configured to receive the laser light reflected by an object; and an output unit configured to generate and output, on a basis of a light receiving signal outputted by the light receiving unit, first information which indicates received light intensity of the laser light with respect to the outgoing direction and a reply delay time of the reflected laser light.
The above information processing device includes an emitting unit, a light receiving unit and an output unit. The emitting unit is configured to emit laser light while changing an outgoing direction of the laser light. The light receiving unit is configured to receive the laser light reflected by an object. The term "object" herein indicates any object situated within a range which the laser light can reach. The output unit is configured to generate and output first information based on a light receiving signal outputted by the light receiving unit. The first information indicates received light intensity of the laser light with respect to the outgoing direction and a reply delay time of the reflected laser light. In other words, the first information indicates received light intensity of the laser light with respect to the outgoing direction and a distance in the outgoing direction from a reference position relating to the emitting position. The output unit may display the first information on a display or may supply the first information to another processing unit. According to this mode, the information processing device can suitably output the first information which indicates the existence of an object.
In one mode of the information processing device, the information processing device further includes a conversion unit configured to convert the first information to second information which indicates the received light intensity in an orthogonal coordinate system (i.e., a coordinate system defined by two orthogonal axes) corresponding to a plane irradiated with the laser light. Thereby, for example, the information processing device can change the coordinates of the first information and output it so that a user can easily recognize the object.
In another mode of the information processing device, the information processing device further includes a first information processing unit configured to output time filtered first information based on multiple pieces of first information which the output unit generates for a predetermined time duration, wherein the conversion unit is configured to convert the time filtered first information to the second information. According to this mode, the information processing device can generate the second information in which influence due to the noise is suitably reduced.
In still another mode of the information processing device, the information processing device moves together with a moving body, wherein the conversion unit is configured, when the moving body is at a stop, to convert the time filtered first information to the second information, and wherein the conversion unit is configured, when the moving body is moving, to convert the first information to which the filtering by the first information processing unit does not applied to the second information. If filtering is performed on a temporal direction, the influence due to the variation of the relative position between the information processing device and the object will appear on the second information. Above things considered, the information processing device filters the first information on a temporal direction only when the moving body is at a stop. Thereby, it is possible to suitably produce the second information which indicates the precise position of the object.
In still another mode of the information processing device, the information processing device moves together with a moving body, wherein the first information processing unit is configured to change a bandwidth of the filtering by changing the predetermined time duration in accordance with a moving speed of the moving body. According to this mode, for example, when the moving body is moving at a high speed, the information processing device determines that the variation of the relative position between the moving body and the object is large and determines to narrow the bandwidth of the filtering. Thereby, it is possible to reduce the influence due to the variation of the relative position of the object.

In still another mode of the information processing device, the conversion unit is configured to convert, to the second information, the first information to which a matched filtering is applied. According to this mode, the conversion unit can generate the second information in which the noise is suitably reduced.

Instill another mode of the information processing device, the second information indicates the received light intensity in a two dimensional space which is parallel to a horizontal plane, and information processing device further includes a display control unit configured to display an image based on the second information on a display unit. According to this mode, the information processing device can let the user visually recognize the existence of peripheral objects.

According to another preferable embodiment of the present invention, there is provided an information processing device including: an emitting unit configured to emit laser light while changing an outgoing direction of the laser light; a light receiving unit configured to receive the laser light reflected by an object; a generation unit configured to generate a two dimensional signal in a polar coordinate system based on a light receiving signal outputted by the light receiving unit with respect to each outgoing direction of the laser light; and a conversion unit configured to convert the two dimensional signal in the polar coordinate system to a two dimensional signal in an orthogonal coordinate system. The two dimensional signal in a polar coordinate system is a two dimensional signal into which multiple light receiving signals are integrated, wherein the each of the multiple receiving signals is generated by the light receiving unit per outgoing direction of the laser light. For example, the above two dimensional signal is an image signal with two coordinate axes of the angle indicating the outgoing direction of the laser light and the delay time (i.e., distance from the information processing device) between the timing of emitting the laser light and the timing of receiving the reflective light thereof, wherein the pixel value of the image signal is the received light intensity. The orthogonal coordinate space indicates a two dimensional space corresponding to the scan surface (irradiated surface) of the laser light, for example. In this way, the information processing device generates a two dimensional signal in a polar coordinate system based on a light receiving signal outputted by the light receiving unit with respect to each outgoing direction of the laser light and converts it to a two dimensional signal in an orthogonal coordinate system. Thereby, it is possible to suitably visualize the existence of the object without losing advantageous information of the received light signal.

According to another preferable embodiment of the present invention, there is provided a control method executed by an information processing device, the information processing device including an emitting unit and a light receiving unit, the emitting unit configured to emit laser light while changing an outgoing direction of the laser light, the light receiving unit configured to receive the laser light reflected by an object, the control method comprising an output process to generate and output, on a basis of a light receiving signal outputted by the light receiving unit, first information which indicates received light intensity of the laser light with respect to the outgoing direction and a reply delay time of the reflected laser light.

According to another preferable embodiment of the present invention, there is provided a program executed by a computer, the computer controlling an information processing device, the information processing device including an emitting unit and a light receiving unit, the emitting unit configured to emit laser light while changing an outgoing direction of the laser light, the light receiving unit configured to receive the laser light reflected by an object, the program making the computer function as an output unit configured to generate and output, on a basis of a light receiving signal outputted by the light receiving unit, first information which indicates received light intensity of the laser light with respect to the outgoing direction and a reply delay time of the reflected laser light. Preferably, the program can be treated in a state that it is stored in a storage medium.

## EMBODIMENT

Now, a preferred embodiment of the present invention will be described below with reference to the attached drawings.

### [Entire Configuration]

FIG. 1 illustrates a block configuration of a LIDAR unit 100 according to the embodiment. The LIDAR unit 100 illustrated in FIG. 1 is a LIDAR (Light Detection and Ranging, or Laser Illuminated Detection and Ranging) based on TOF (Time of Flight), and performs a 360-degree ranging of objects in a horizontal direction to display the ranging result as an image. For example, the LIDAR unit 100 is used for the purpose of an assistance of peripheral environment recognitions of a vehicle as a part of an advanced driving assistance system. The LIDAR unit 100 mainly includes a core unit 1, a signal processing unit 2, a display control unit 3 and a display 4.

The core unit 1 emits pulse lasers at all directions equivalent to 360 degrees in the horizontal direction while gradually changing the outgoing direction of the pulse lasers. In this case, the core unit 1 emits a pulse laser per segment (out of 900 segments according to the embodiment) into which 360 degrees in the horizontal direction are evenly divided. Then, the core unit 1 supplies the signal processing unit 2 with a signal (referred to as "segment signal Sseg") which indicates the received light intensity per segment measured by receiving a reflective light of the pulse laser in a predetermined duration after emitting the pulse laser.

The signal processing unit 2 generates two dimensional image (referred to as "polar coordinate space frame Fp") in a polar coordinate space (polar coordinate system) by integrating the segment signals Sseg of all segments which are received from the core unit 1, wherein the polar coordinate space frame Fp indicates the relationship between each segment corresponding to each direction of 360 degrees in the horizontal direction and the corresponding distance from the LIDAR unit 100. Then, on the basis of the polar coordinate space frame Fp, the signal processing unit 2 generates a two dimensional image (referred to as "orthogonal coordinate space frame Fo") in the orthogonal (Cartesian) coordinate system based on the scan plate (irradiated plate) of pulse lasers and supplies the display control unit 3 therewith. The display control unit 3 displays on the display 4 an image based on the orthogonal coordinate space frame Fo received from the signal processing unit 2.

[Configuration of Core Unit]

FIG. 2 illustrates an example of a schematic configuration of the core unit 1. As illustrated in FIG. 2, the core unit 1 mainly includes a crystal oscillator 10, a synchronization controller 11, a LD driver 12, a laser diode 13, a scanner 14, a motor controller 15, a photo detector 16, a current/voltage conversion circuit (Transimpedance Amplifier) 17, an A/D converter 18 and a segmenter 19.

The crystal oscillator 10 supplies the synchronization controller 11 and the A/D converter 18 with a pulsed clock signal "S1". As an example, the clock frequency according to the embodiment is set to 1.8 GHz. Hereinafter, each clock based on the clock signal S1 is also referred to as "sample clock".

The synchronization controller 11 supplies the LD driver 12 with a pulsed signal (referred to as "trigger signal S2"). The trigger signal S2 according to the embodiment is periodically asserted at intervals of 131072 (= $2^{17}$) sample clock. Hereinafter, a time period from timing of asserting the trigger signal S2 to the next timing of asserting the trigger signal S2 is referred to as "segment period". The synchronization controller 11 supplies the segmenter 19 with a signal (hereinafter referred to as "segment extraction signal S3") which determines the timing for the later-mentioned segmenter 19 to extract the output of the A/D converter 18. Each of the trigger signal S2 and the segment extraction signal S3 is a logic signal and they are synchronized with each other as illustrated in FIG. 3 to be mentioned later. According to the embodiment, the synchronization controller 11 asserts the segment extraction signal S3 for a time width (referred to as "gate width Wg") equivalent to 2048 sample clocks.

The LD driver 12 supplies pulsed current to the laser diode 13 in synchronization with the trigger signal S2 inputted from the synchronization controller 11. For example, the laser diode 13 is an infrared pulse laser with the wavelength of 905 nm and emits pulses of light based on the pulsed current supplied from the LD driver 12. The laser diode 13 according to the embodiment emits each pulse of light for approximately five nano seconds.

The scanner 14 includes configurations of a transmission optical system and a receiving optical system. While scanning 360 degrees in the horizontal plane by use of pulses of light emitted from the laser diode 13, the scanner 14 leads, to the photo detector 16, the return light reflected at an object (referred to as "target object") that is irradiated with the pulses of emitted light. According to the embodiment, the scanner 14 includes a motor for revolving, and the motor is controlled by the motor controller 15 to revolve once every 900 segments. The angular resolution capability in this case is 0.4° (=360°/900) per segment. The LD driver 12 and the scanner 14 constitute an example of the "emitting unit" according to the present invention.

Preferably, the scan surface scanned by the scanner 14 is not an umbrella surface but a flat surface. Additionally, when the LIDAR unit 100 is mounted on a moving body, it is desirable for the scan surface to be in parallel (i.e., horizontal) with the land surface on which the moving body travels. This leads to a high correlation between polar coordinate space frames Fp which are successively generated in time series as described later, and therefore it is possible to precisely display the peripheral environment.

Examples of the photo detector 16 include an avalanche photodiode, and the photo detector 16 generates a slight current in accordance with the amount of the reflective light from the target object through the scanner 14. The photo detector 16 supplies the generated slight current to the current/voltage conversion circuit 17. The current/voltage conversion circuit 17 amplifies the slight current supplied from the photo detector 16 to thereby convert it to a voltage signal, and inputs the converted voltage signal to the A/D converter 18.

The A/D converter 18 converts, on the basis of the clock signal S1 supplied from the crystal oscillator 10, the voltage signal supplied by the current/voltage conversion circuit 17 to the digital signal, and thereafter the A/D converter 18 supplies the converted digital signal to the segmenter 19. Hereinafter, a digital signal which the A/D converter 18 generates per one clock is referred to as "sample". One sample corresponds to one pixel data of the later-mentioned polar coordinate space frame Fp. The photo detector 16, the current/voltage conversion circuit 17 and the A/D converter 18 constitute an example of the "light receiving unit" according to the present invention.

The segmenter 19 generates a segment signal Sseg by extracting digital signals which the A/D converter 18 outputs during the time period when the segment extraction signal S3 is asserted for the gate width Wg equivalent to 2048 sample clocks. The segmenter 19 supplies the generated segment signal Sseg to the signal processing unit 2.

FIG. 3 illustrates a time-series waveforms corresponding to the trigger signal S2 and the segment extraction signal S3. As illustrated in FIG. 3, according to the embodiment, a segment period that is one cycle of the trigger signal S2 being asserted is determined to have the length of 131072 sample clocks (referred to as "SMPCLK" in the drawings). The pulse width of the trigger signal S2 is determined to have the length of 64 sample clocks, and the gate width Wg is determined to have the length of 2048 sample clocks.

In this case, since the segment extraction signal S3 is asserted during the period of the gate width Wg after the trigger signal S2 is asserted, the segmenter 19 extracts 2048 samples outputted by the A/D converter 18 during the trigger signal S2 being asserted. The longer the gate width Wg is, the longer the maximum ranging distance (i.e., ranging limit distance) from the LIDAR unit 100 becomes.

According to the embodiment, the frequency in the segment period is approximately 13.73 kHz (that is nearly equal to 1.8 GHz / 131072), and the frame frequency (i.e., rotational velocity of the scanner 14) of the polar coordinate space frame Fp generated based on the segment signal Sseg by the signal processing unit 2 is approximately 15.36 Hz (that is nearly equal to 13.73kHz / 900) considering that one frame is configured of 900 segments. When calculated simply, the maximum ranging distance is 170.55m (that is nearly equal to {2048 / 1.8GHz} · c/2; "c" stands for light speed) corresponding to the distance where light shuttles for a time length corresponding to the gate width Wg. As described later, the maximum ranging distance is slightly shorter than 170.55m due to the later-described origin offset.

[Configuration of Signal Processing Unit]

FIG. 4 is a block diagram indicating the logical configuration of the signal processing unit 2. As illustrated in FIG. 4, the signal processing unit 2 includes a frame generator 21, a buffer 22, a frame filter 23 and an orthogonal space converter 24.

The frame generator 21 generates polar coordinate space frames Fp each of which is made from segment signals Sseg corresponding to 900 segments and stores the generated polar coordinate space frames Fp on the buffer 22. Given that there are 2048 samples per segment and that the number of all segments is 900 according to the embodiment, the frame generator 21 generates a 900 × 2048 image as a polar coordinate space frame Fp. The polar coordinate space frame Fp is an example of the "first information" and the "two dimensional signal in polar coordinate system" according to the present invention. The frame generator 21 and the above-mentioned segmenter 19 are examples of the "output unit" and the "generation unit" according to the present invention.

The buffer 22 stores the polar coordinate space frame Fp generated by the frame generator 21 for at least a predetermined time. The length of the above-mentioned predetermined time is set to such a length that the necessary number of polar coordinate space frames Fp which the frame filter 23 needs are at least stored on the buffer 22.

The frame filter 23 extracts a predetermined number (e.g., 16 frames) of time-series polar coordinate space frames Fp from the buffer 22 and applies a frame filtering to them to thereby generate the time-averaged polar coordinate space frame Fp (referred to as "averaged frame Fa"). Thereby, the frame filter 23 generates such an averaged frame Fa that the noise which appears in each polar coordinate space frame Fp is suppressed. In this case, the term "frame filtering" herein includes any processing to reduce the noise by use of time-series polar coordinate space frame Fp. For example, the frame filter 23 may generate the averaged frame Fa by calculating the moving average of a predetermined number of the polar coordinate space frames Fp extracted from the buffer 22, or may generate the averaged frame Fa by applying a first order infinite impulse response filter thereto. The frame filter 23 is an example of the "first information processing unit" according to the present invention.

The orthogonal space converter 24 generates an orthogonal coordinate space frame Fo by converting the coordinate system of the averaged frame Fa outputted by the frame filter 23 from a polar coordinate system into an orthogonal (Cartesian) coordinate system. In this case, the orthogonal space converter 24 generates the orthogonal coordinate space frame Fo by specifying each pixel of the averaged frame Fa to which the each pixel of the orthogonal coordinate space frame Fo corresponds. Concrete examples will be given later of the orthogonal coordinate space frame Fo and the generating method thereof. Then, the orthogonal space converter 24 supplies the generated orthogonal coordinate space frame Fo to the display control unit 3. The orthogonal space converter 24 is an example of the "conversion unit" according to the present invention. The orthogonal coordinate space frame Fo is an example of the "second information" and the "two dimensional signal in the orthogonal coordinate system" according to the present invention.

[Concrete Example]

Next, a description will be given of concrete examples of the processing executed by the signal processing unit 2 with reference to FIG. 5A to FIG. 8.

(1) Polar coordinate space frame

FIG. 5A is a plane view schematically illustrating surroundings of the LIDAR unit 100. FIG. 5B illustrates a polar coordinate space frame Fp generated at the time when the LIDAR unit 100 is situated at the position indicated by FIG. 5A. As illustrated in FIG. 5A, in the vicinity of the LIDAR unit 100, as target objects, there are mainly a building, bicycles, a vehicle, first and second chain-link fences, a concrete wall, weeds and a person. In FIG. 5B, the higher the value (i.e., received light intensity) of the digital signal outputted by the A/D converter 18 is, the closer the color becomes to white.

The vertical axis of the polar coordinate space frame Fp illustrated in FIG. 5B indicates the index "s" (s = 0 to 899) added to each segment corresponding to each scan angle of the scanner 14 whereas the horizontal axis thereof indicates the index "k" (k = 0 to 2047) added to each of 2048 samples generated by the A/D converter 18 during the segment extraction signal S3 being asserted. It is noted that the segment index "s = 0" corresponds to 0 degree (the direction indicated by the arrow 80 in FIG. 5A) of the scan angle of the scanner 14 and that the segment index "s = 450" corresponds to 180 degree of the scan angle of the scanner 14.

The value of the sample index k indicated by the horizontal axis in FIG. 5B is in proportion to the distance (referred to as "target distance Ltag") to each target object. Concretely, if the clock frequency is "fsmp" (= 1.8 GHz) and electrical and optical delays are not considered, the relationship between the sample index "k" and delay time "Td" is expressed as

$$Td = k / fsmp \approx k \cdot 0.55555 \text{ nsec},$$

wherein the delay time Td is a time length between the timing of asserting a trigger signal S2 and the timing of outputting a sample which corresponds to the pulse of light outputted based on the asserted trigger signal S2. In this case, if any delays to be mentioned later are not considered, the relationship between the target distance Ltag and the delay time Td is expressed as the following equation (1).

$$Ltag = Td \cdot (c / 2) = (k / fsmp) \cdot (c / 2) \quad (1)$$

In practice, there are electrical and optical delays on the transmission route and the receiving route, wherein the transmission route corresponds to a time period between the transmission of the trigger signal from the synchronization controller 11 to the LD driver 12 and the emission of light by the scanner 14, and wherein the receiving route corresponds to a time period between the incidence of the return light to the scanner 14 and the conversion to the digital signal by the A/D converter 18. According to the example in FIG. 5B, the sample index "k = 270" corresponds to the position (i.e., origin of distance) where the target distance Ltag is 0. Thus, in order to calculate the target distance Ltag from the sample index k, it is necessary to provide an offset (referred to as "origin offset k0") on the index k and to subtract the origin offset k0 (i.e., 270) from the index k. When further considering the origin offset k0, the equation (1) is replaced as the following equation (2).

$$Ltag = \{(k - k0) / fsmp)\} \cdot (c / 2) \quad (2)$$

Here, a vertical stripe 70 indicating a high output portion just before the sample index "k = 270" is generated due to stray light that enters the photo detector 16. It is noted that a part of a pulse of light outputted by the laser diode 13 is incident as the stray light on the photo detector 16 directly or through reflection(s) inside the core unit 1.

As described above, the coordinate space of the polar coordinate space frame Fp is a polar coordinate space which has a vertical axis corresponding to the scan angle (i.e., angle) and a horizontal axis corresponding to the target distance Ltag (i.e., radius) . When the frame generator 21 receives from the segmenter 19 of the core unit 1 the segment signals Sseg that correspond to 900 segments having the index "k = 0" to the index "k = 899", the frame generator 21 generates one polar coordinate space frame Fp by integrating them and stores the generated polar coordinate space frame Fp on the buffer 22.

FIG. 6 illustrates the averaged frame Fa which the frame filter 23 generates based on time-series sixteen of polar coordinate space frames Fp. In this case, as one example, by applying a first-order IIR filter whose coefficient is one sixteenth, the frame filter 23 generates an averaged frame Fa to which the mean effect of approximately sixteen frames is added. When the averaged frame Fa illustrated in FIG. 6 is compared to the polar coordinate space frame Fp illustrated in FIG. 5B, the high output areas corresponding to the noise that appears on the polar coordinate space frame Fp illustrated in FIG. 5B are smoothed.

FIG. 7 is a display example of the orthogonal coordinate space frame Fo obtained on such an assumption that the polar coordinate space frame Fp illustrated in FIG. 5B is inputted to the orthogonal space converter 24. The orthogonal coordinate space frame Fo illustrated in FIG. 7 is a bitmap with 512 pixels of both horizontal and vertical sizes, and the central pixel position thereof corresponds to the position of the LIDAR unit 100. In the case of FIG. 7, the length of a side of the orthogonal coordinate space frame Fo is equivalent to the maximum ranging distance (i.e., 170.55 m) that corresponds to the gate width Wg.

According to FIG. 7, The polar coordinate space frame Fp, to which the time averaging is not applied, is converted to the orthogonal coordinate space frame Fo. Even in this case, the concrete wall behind the first fence and the second fence can be visually recognized. As the explanation of the later-mentioned section "Supplemental Explanation of Effect", conventional LIDARs which detect point groups of objects cannot detect the concrete wall. Thus, as illustrated in FIG. 7, there is an advantageous effect compared to the conventional LIDARs even when the orthogonal coordinate space frame Fo to which the polar coordinate space frame Fp is directly converted is displayed.

FIG. 8 illustrates the orthogonal coordinate space frame Fo which the orthogonal space converter 24 generates from the averaged frame Fa illustrated in FIG. 6.

According to FIG. 8, because of the reduction of the noise by averaging the polar coordinate space frame Fp, the existences of the concrete wall, the first and the second fences, the building and the bicycles are explicitly illustrated. Thus, by displaying on the display 4 the orthogonal coordinate space frame Fo in FIG. 8 generated from the averaged frame Fa, the LIDAR unit 100 can let the user explicitly recognize the existence and the position of each target object situated in the 360 degrees in the horizontal direction.

A description will be given of a concrete example of the method for converting the averaged frame Fa or the polar coordinate space frame Fp to the orthogonal coordinate space frame Fo.

In this case, first, the orthogonal space converter 24 calculates polar coordinate values each corresponding to each pixel of the orthogonal coordinate space frame Fo. Concretely, when the polar coordinate value is expressed by "(R, θ)" and the coordinate value corresponding to each pixel of the orthogonal coordinate space frame Fo is expressed by "(X, Y)", the values "R" and "θ" are expressed as the following equations based on a general formula of coordinate transformation.

$$R = \sqrt{(X \cdot X + Y \cdot Y)} \quad (3)$$

$$\theta = \mathrm{atan}(X, Y) \quad (4)$$

The segment index s is also expressed as the following equation (5).

$$s = (\theta / 2\pi) \cdot 900 \quad (5)$$

Furthermore, the sample index k is expressed as the following equation (6) by substituting "R" for "Ltag" in the equation (2) and changing the equation with respect to the index k.

$$k = k0 + R \cdot fsmp \cdot (2 / c) \quad (6)$$

Thus, the orthogonal space converter 24 calculates the sample index k mostly corresponding to the orthogonal coordinate value (X, Y) of the orthogonal coordinate space frame Fo by referring to the equations (3) and (6) while calculating the segment index s mostly-corresponding to the orthogonal coordinate value (X, Y) of the orthogonal coordinate space frame Fo by referring to the equations (4) and (5). It is noted that, since the values "s" and "k" derived from the equations (3) to (6) are both real numbers, the orthogonal space converter 24 converts them to integer numbers by rounding. Thereby, each pixel of the averaged frame Fa or the polar coordinate space frame Fp which corresponds to each pixel of the orthogonal coordinate space frame Fo is specified. After the display control unit 3 receives the orthogonal coordinate space frame Fo from the orthogonal space converter 24, the display control unit 3 converts the pixel values of the orthogonal coordinate space frame Fo to luminance values by using a map of grayscale with a proper scale to thereby display an image. In this case, the display control unit 3 may display on the display 4 the orthogonal coordinate space frame Fo with colors which differ depending on the pixel value.

It is noted that, in a case where the orthogonal coordinate space frame Fo generated from the averaged frame Fa is used, a target object relatively moving with respect to the LIDAR unit 100 forms a line along the moving trajectory. For example, in FIG. 8, the bicycles are moving (see FIG. 5A) while the LIDAR unit 100 is still. As a result, according to FIG. 8, the bicycles with trails are displayed. Even in this case, there is such an advantage that it can emphasize a moving object while suitably visualizing the moving direction of the moving object.

[Supplemental Explanation of Effect]

Next, a description will be given of the advantageous effect of the LIDAR unit 100 according to the embodiment as compared to conventional LIDARs with reference to FIGS. 9A to 11.

FIG. 9A illustrates the polar coordinate space frame Fp illustrated in FIG. 5B with an inverted triangle mark that indicates the high output area corresponding to the segment with the index "s = 250". FIG. 9B illustrates a waveform of the segment signal Sseg corresponding to the segment with the index "s = 250". FIG. 9C is an enlarged view of the peak of the waveform illustrated in FIG. 9B.

As illustrated in FIGS. 9B and 9C, there can be seen the peak of the waveform at the sample index "k = 501" indicated by the inverted triangle mark illustrated in FIG. 9A. By substituting in the equation (2) the difference (i.e., 231) between the sample index "k = 501" corresponding to the peak (peak position) and the origin offset "k0 = 270", the target distance Ltag (approximately 19. 237m) corresponding to the position of the peak can be calculated.

As described above, a general LIDAR detects a target object and measures the distance thereto by calculating the target distance Ltag corresponding to the peak position of the output waveform per segment. In this case, since there explicitly exists an output pulse corresponding to the return light from a target object at the segment with the index "s = 250", it is possible to precisely detect the target object and measure the distance thereto. It is noted that, depending on the type of the LIDAR, the LIDAR additionally maximizes the signal-to-noise ratio by applying a matched filter before the detection of the peak position and/or specifies the real number of the sample index corresponding to the peak position through interpolation.

FIG. 10A illustrates the polar coordinate space frame Fp in FIG. 5B with marks 71 to 73 which indicate the positions of three high output parabolas around the segment with the index "s = 0". FIG. 10B illustrates a waveform of the segment signal Sseg corresponding to the segment with the index "s = 0".

In the case of the waveform illustrated in FIG. 10B, the peak position is indicated by the mark 71. In the case of the real space illustrated in FIG. 5A, the first chain-link fence is situated at that position. In contrast, the portion corresponding to the mark 72 forms a local peak in the waveform indicated by FIG. 10B. However, it is smaller than the peak due to the noise indicated by the frame 74. In the case of the real space illustrated in FIG. 5A, the second chain-link fence is situated at that position. Furthermore, the portion corresponding to the mark 73 does not form the peak in the waveform illustrated in FIG. 10B. In the case of the real space illustrated in FIG. 5A, the concrete wall is situated at that position.

As described above, according to the waveform of the segment with the index "s = 0", the second fence corresponding to the mark 72 and the concrete wall corresponding to the mark 73 cannot be detected. In contrast, since the output of each segment is displayed adjacent to the outputs of the adjacent segments in the polar coordinate space frame Fp illustrated on FIG. 5B, there appear the high output parabolas corresponding to the second fence and the concrete wall which do not appear in the waveform of the segment with index "s = 0".

FIG. 11 plots, on the orthogonal coordinate system, point groups of the target objects detected by a typical LIDAR. FIG. 11 illustrates each position corresponding to the most noted peak per output waveform of each segment.

According to FIG. 11, the concrete wall behind the first and the second fences is not detected at all. Additionally, plotted circles are displayed even on the portion where any target object does not actually exist. This is because one peak is for sure detected per segment and plotted circles are displayed on the positions corresponding to the detected peaks. To prevent these incorrect displays, normal LIDAR products are normally equipped with such a function that only peaks higher than a predetermined threshold are selectively detected. However, setting such a predetermined threshold makes more difficult to detect a point group of a target object with a low reflection rate of the outgoing light. In this way, unfortunately, according to the specification of a conventional LIDAR which outputs information on a point group corresponding to the peak positions of waveforms received at each segment, information on target objects situated in the distance could be lost.

Above things considered, the LIDAR unit 100 according to the embodiment generates the polar coordinate space frame Fp from waveforms received at each segment without converting to point group information, and thereafter displays on the display 4 the orthogonal coordinate space frame Fo generated through coordinate conversion. It makes it possible to suitably visualize even a target object that cannot be detected when converting the waveforms to the point group information like conventional practices. Additionally, by displaying the orthogonal coordinate space frame Fo in which the polar coordinate space frame Fp is averaged along a temporal direction, the LIDAR unit 100 can enhance the visibility while suitably reducing the noise.

[Modifications]

Next, a description will be given of preferred modifications of the embodiment. The following modifications may be applied to the above embodiment in any combination.

(First Modification)

When the LIDAR unit 100 is mounted on a vehicle, target objects in the vicinity of the LIDAR unit 100 relatively moves with respect to the LIDAR unit 100 at the time of the vehicle traveling. In this case, since the orthogonal coordinate space frame Fo is generated based on the averaged frame Fa that is a time-averaged polar coordinate space frame Fp, lines along the moving trajectory appear on the orthogonal coordinate space frame Fo. To prevent the appearance, the LIDAR unit 100 may determine whether or not the vehicle on which the LIDAR unit 100 is mounted is at a stop to thereby execute the process by the frame filter 23 only at the time of determining that the vehicle is at a stop.

FIG. 12 illustrates a schematic configuration of the signal processing unit 2 according to the first modification. As illustrated in FIG. 12, at the time of the vehicle traveling, the orthogonal space converter 24 generates the orthogonal coordinate space frame Fo based on the polar coordinate space frame Fp which the frame generator 21 generates. Instead of the example in FIG. 12, the orthogonal space converter 24 may generate the orthogonal coordinate space frame Fo by extracting from the buffer 22 the polar coordinate space frame Fp just after the frame generator 21 stores the polar coordinate space frame Fp on the buffer 22. In contrast, at the time of the vehicle stopping, as with the embodiment, the orthogonal space converter 24 generates the orthogonal coordinate space frame Fo based on the averaged frame Fa which the frame filter 23 outputs. It is noted that the signal processing unit 2 may determine whether or not the vehicle is at a stop through the output of an acceleration sensor and/or a distance sensor which are not shown or may make the determination by receiving vehicle speed information based on a protocol such as CAN (Controller Area Network).

In this way, the LIDAR unit 100 does not use the averaged frame Fa at the time of the vehicle traveling. Thereby, the LIDAR unit 100 can suppress target objects from being displayed on the orthogonal coordinate space frame Fo in such a state that the target objects have trails.

In another example, on the basis of the moving speed of the vehicle, the LIDAR unit 100 may determine the number (i.e., the depth of the filter) of the polar coordinate space frames Fp used for generating the orthogonal coordinate space frame Fo. Namely, the LIDAR unit 100 may determine the time duration for averaging the polar coordinate space frame Fp. In this case, the LIDAR unit 100 may acquire the vehicle speed information from unshown sensor(s) and/or the vehicle.

Generally, the larger the number of the polar coordinate space frames Fp used for generating the orthogonal coordinate space frame Fo is and the longer the time duration for averaging the polar coordinate space frame Fp is, the longer the lines of the moving trajectories which appear on the orthogonal coordinate space frame Fo tend to be. Similarly, the higher the relative speed between the LIDAR unit 100 and a target object is, the longer the moving distance of the target object between time-series polar coordinate space frames Fp becomes and therefore the longer the lines of the moving trajectories which appear on the orthogonal coordinate space frame Fo tend to be.

Above things considered, the higher the speed of the vehicle is, the smaller the frame filter 23 determines the number of the polar coordinate space frames Fp for generating the orthogonal coordinate space frame Fo with reference to a predetermined map. The above-mentioned map is a map between the vehicle speed and parameter(s) for determining the number of the polar coordinate space frames Fp used for generating the orthogonal coordinate space frame Fo. For example, the map is prepared in advance through experimental trials . Thereby, it is possible to suitably suppress the deterioration of the visibility due to the excessively-long lines of the moving trajectories which appear on the orthogonal coordinate space frame Fo.

(Second Modification)

The frame generator 21 may suppress the noise by applying a matched filter to the waveform indicated by the segment signal Sseg received from the core unit 1. Then, in this case, the orthogonal space converter 24 generates the orthogonal coordinate space frame Fo by converting, to the orthogonal coordinate system, the polar coordinate space frame Fp whose noise is suppressed through the matched filter or the averaged frame Fa that is a time-averaged polar coordinate space frame Fp. According to this mode, the LIDAR unit 100 can display an image on which the noise is suitably reduced on the display 4.

(Third Modification)

The configuration of the LIDAR unit 100 is not limited to the configuration illustrated in FIG. 1. For example, the LIDAR unit 100 may not be equipped with the display control unit 3 and the display 4. In this case, for example, the LIDAR unit 100 detects a target object through a known image recognition processing over the orthogonal coordinate space frame Fo which the signal processing unit 2 generates and informs the existence of the target object through an audio output device. In another example, the LIDAR unit 100 may store the orthogonal coordinate space frame Fo which the signal processing unit 2 generates on its storage unit as with the present position information of the LIDAR unit 100 outputted by a GPS receiver or the like.

The LIDAR unit 100 may generate the orthogonal coordinate space frame Fo per layer by repeating horizontal scanning by the scanner 14 on multiple layers which are lined in the vertical direction.

(Fourth Modification)

The configuration of the core unit 1 illustrated in FIG. 2 is an example and the configuration of the core unit 1 to which the present invention can be applied is not limited to the configuration illustrated in FIG. 2. For example, the laser diode 13 and the motor controller 15 may be configured to rotate together with the scanner 14.

BRIEF DESCRIPTION OF REFERENCE NUMBERS

**[0084]**

| | |
|---|---|
| 1 | Core unit |
| 2 | Signal processing unit |
| 3 | Display control unit |
| 4 | Display |
| 100 | LIDAR unit |

## Claims

1. An information processing device comprising:

    an emitting unit configured to emit laser light while changing an outgoing direction of the laser light;
    a light receiving unit configured to receive the laser light reflected by an object; and
    an output unit configured to generate and output, on a basis of a light receiving signal outputted by the light receiving unit, first information which indicates received light intensity of the laser light with respect to the outgoing direction and a reply delay time of the reflected laser light.

2. The information processing device according to claim 1, further comprising
a conversion unit configured to convert the first information to second information which indicates the received light intensity in an orthogonal coordinate system corresponding to a plane irradiated with the laser light.

3. The information processing device according to claim 2, further comprising
a first information processing unit configured to output time filtered first information based on multiple pieces of first information which the output unit generates for a predetermined time duration,
wherein the conversion unit is configured to convert the time filtered first information to the second information.

4. The information processing device according to claim 3,
wherein the information processing device moves together with a moving body,
wherein the conversion unit is configured, when the moving body is at a stop, to convert the time filtered first information to the second information, and
wherein the conversion unit is configured, when the moving body is moving, to convert the first information to which the filtering by the first information processing unit does not applied to the second information.

5. The information processing device according to claim 3,
wherein the information processing device moves together with a moving body, and
wherein the first information processingunit is configured to change a bandwidth of the filtering by changing the predetermined time duration in accordance with a moving speed of the moving body.

6. The information processing device according to any one of claims 2 to 5,
wherein the conversion unit is configured to convert, to the second information, the first information to which a matched filtering is applied.

**7.** The information processing device according to any one of claims 2 to 6, wherein the second information indicates the received light intensity in a two dimensional space which is parallel to a horizontal plane, and further comprising a display control unit configured to display an image based on the second information on a display unit.

**8.** An information processing device comprising:

an emitting unit configured to emit laser light while changing an outgoing direction of the laser light;
a light receiving unit configured to receive the laser light reflected by an object;
a generation unit configured to generate a two dimensional signal in a polar coordinate system based on a light receiving signal outputted by the light receiving unit with respect to each outgoing direction of the laser light; and
a conversion unit configured to convert the two dimensional signal in the polar coordinate system to a two dimensional signal in an orthogonal coordinate system.

**9.** An information processing device comprising:

an emitting unit configured to emit laser light while changing an outgoing direction of the laser light;
a light receiving unit configured to receive the laser light reflected by an object;
an output unit configured to generate and output, on a basis of a light receiving signal outputted by the light receiving unit, first information which indicates received light intensity of the laser light with respect to the outgoing direction and a distance in the outgoing direction from a reference position relating to an emitting position.

**10.** A control method executed by an information processing device, the information processing device including an emitting unit and a light receiving unit, the emitting unit configured to emit laser light while changing an outgoing direction of the laser light, the light receiving unit configured to receive the laser light reflected by an object, the control method comprising an output process to generate and output, on a basis of a light receiving signal outputted by the light receiving unit, first information which indicates received light intensity of the laser light with respect to the outgoing direction and a reply delay time of the reflected laser light.

**11.** A program executed by a computer, the computer controlling an information processing device, the information processing device including an emitting unit and a light receiving unit, the emitting unit configured to emit laser light while changing an outgoing direction of the laser light, the light receiving unit configured to receive the laser light reflected by an object, the program making the computer function as an output unit configured to generate and output, on a basis of a light receiving signal outputted by the light receiving unit, first information which indicates received light intensity of the laser light with respect to the outgoing direction and a reply delay time of the reflected laser light.

**12.** A storage medium storing the program according to claim 11.

FIG. 1

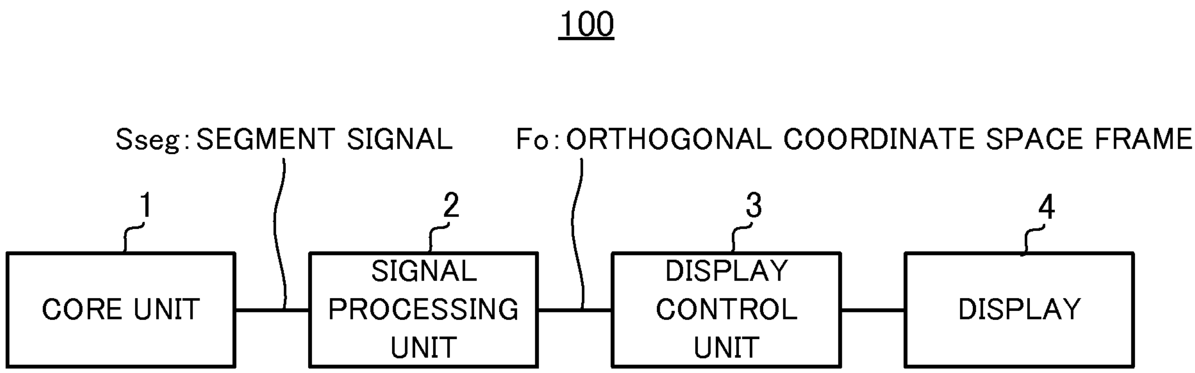
100
Sseg: SEGMENT SIGNAL
Fo: ORTHOGONAL COORDINATE SPACE FRAME
1
2
3
4
CORE UNIT
SIGNAL PROCESSING UNIT
DISPLAY CONTROL UNIT
DISPLAY

FIG. 2

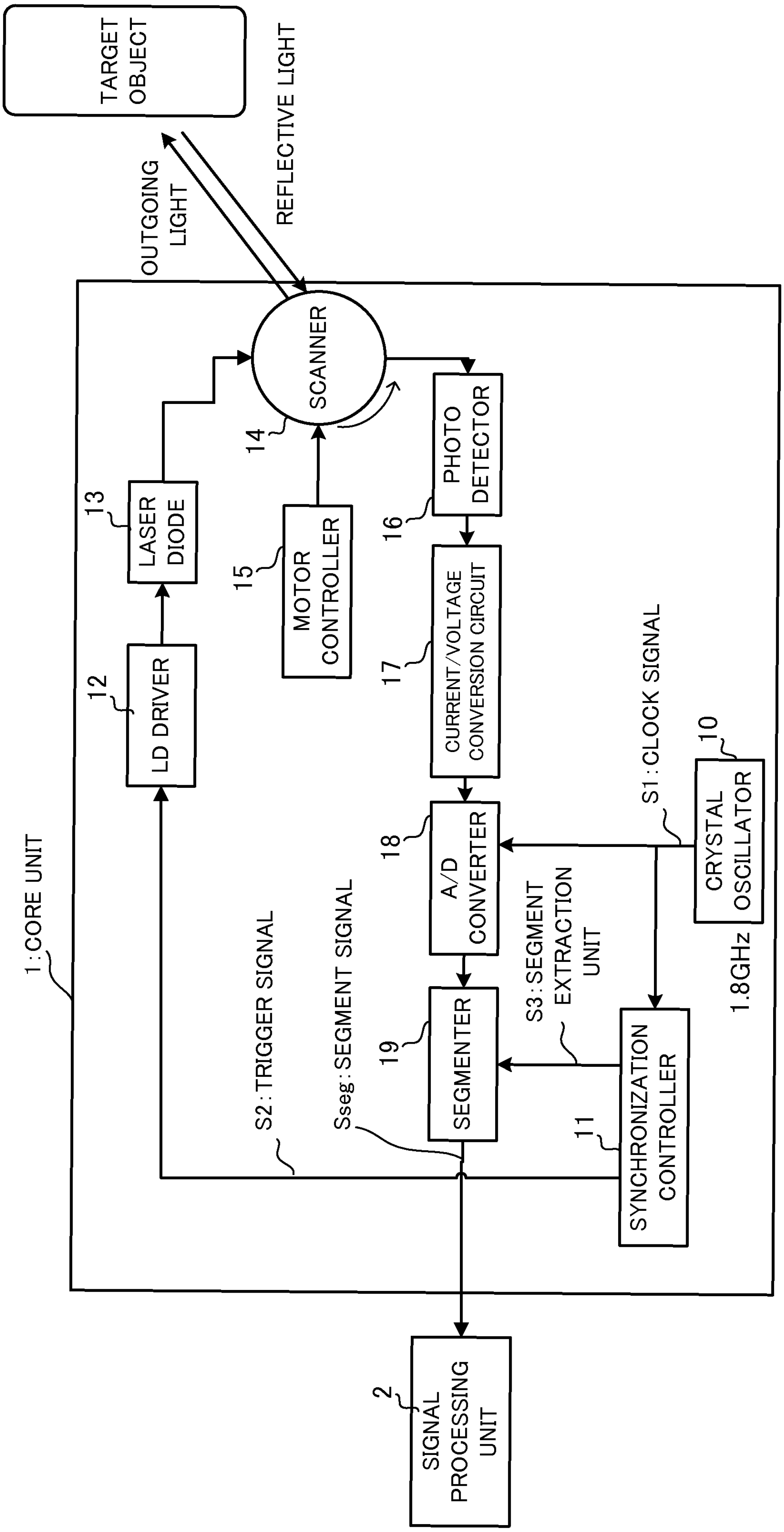
TARGET OBJECT
OUTGOING LIGHT
REFLECTIVE LIGHT
1: CORE UNIT
SCANNER
14
LASER DIODE
13
LD DRIVER
12
MOTOR CONTROLLER
15
PHOTO DETECTOR
16
CURRENT/VOLTAGE CONVERSION CIRCUIT
17
A/D CONVERTER
18
SEGMENTER
19
SYNCHRONIZATION CONTROLLER
11
CRYSTAL OSCILLATOR
10
1.8GHz
S1: CLOCK SIGNAL
S2: TRIGGER SIGNAL
S3: SEGMENT EXTRACTION UNIT
Sseg: SEGMENT SIGNAL
SIGNAL PROCESSING UNIT
2

FIG. 3

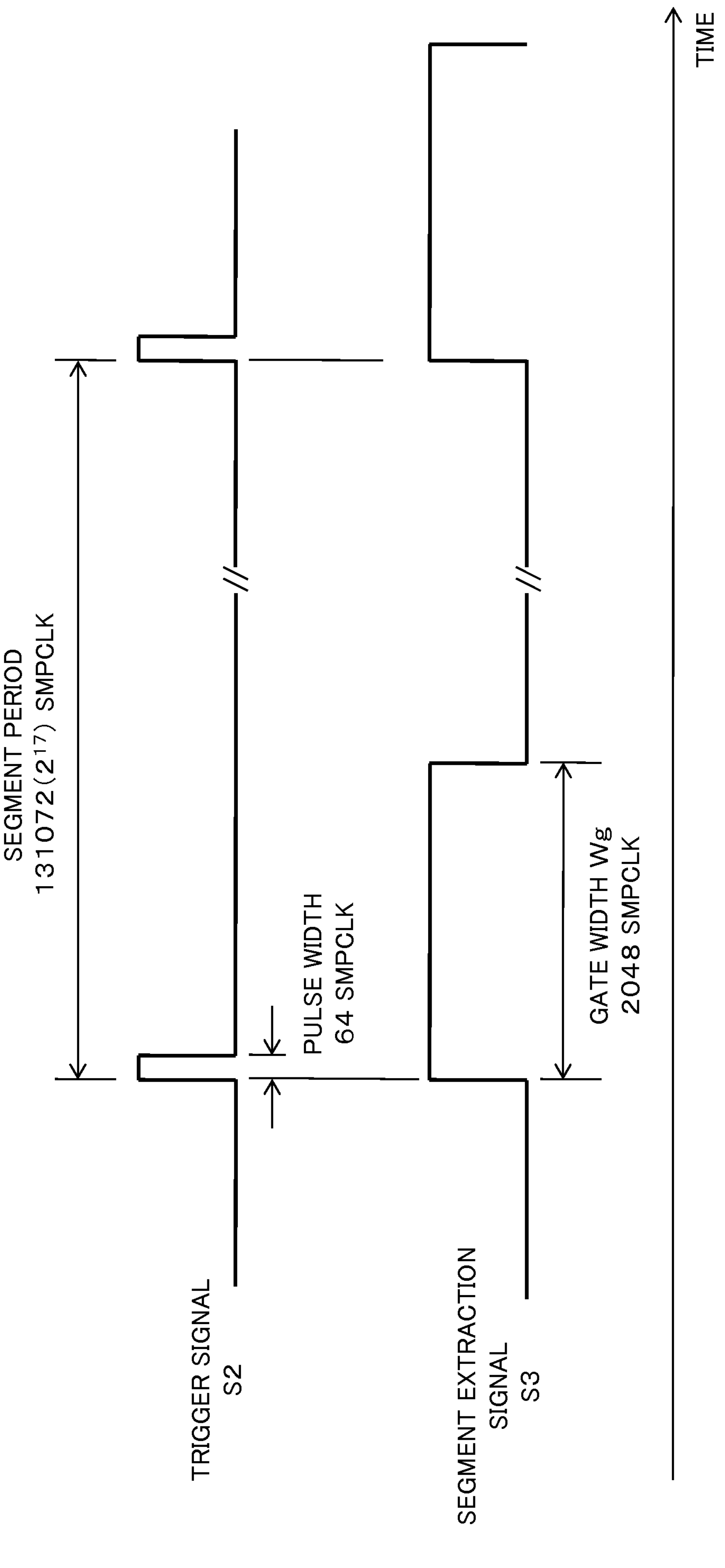
TIME
SEGMENT PERIOD
131072 (2^17) SMPCLK
PULSE WIDTH
64 SMPCLK
GATE WIDTH Wg
2048 SMPCLK
TRIGGER SIGNAL
S2
SEGMENT EXTRACTION
SIGNAL
S3

FIG. 4

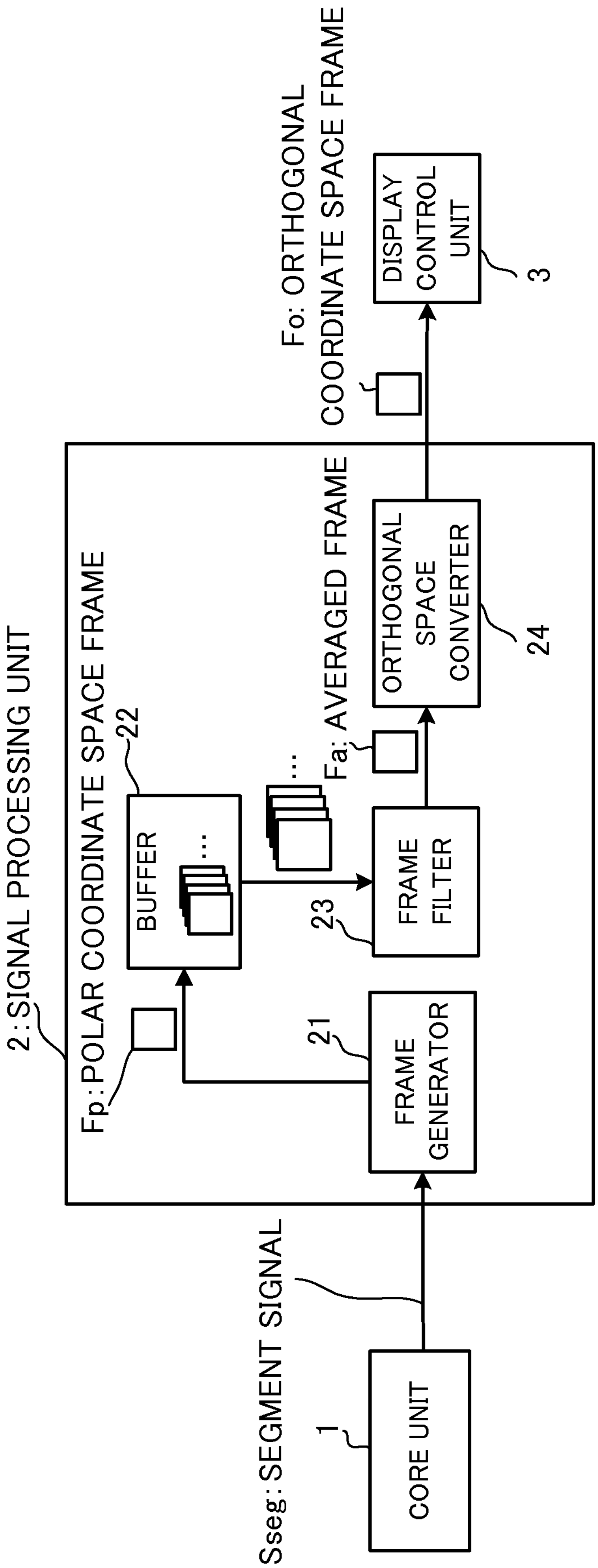
Sseg: SEGMENT SIGNAL
CORE UNIT
1
2: SIGNAL PROCESSING UNIT
Fp: POLAR COORDINATE SPACE FRAME
FRAME GENERATOR
21
BUFFER
22
FRAME FILTER
23
Fa: AVERAGED FRAME
ORTHOGONAL SPACE CONVERTER
24
Fo: ORTHOGONAL COORDINATE SPACE FRAME
DISPLAY CONTROL UNIT
3

FIG. 5A

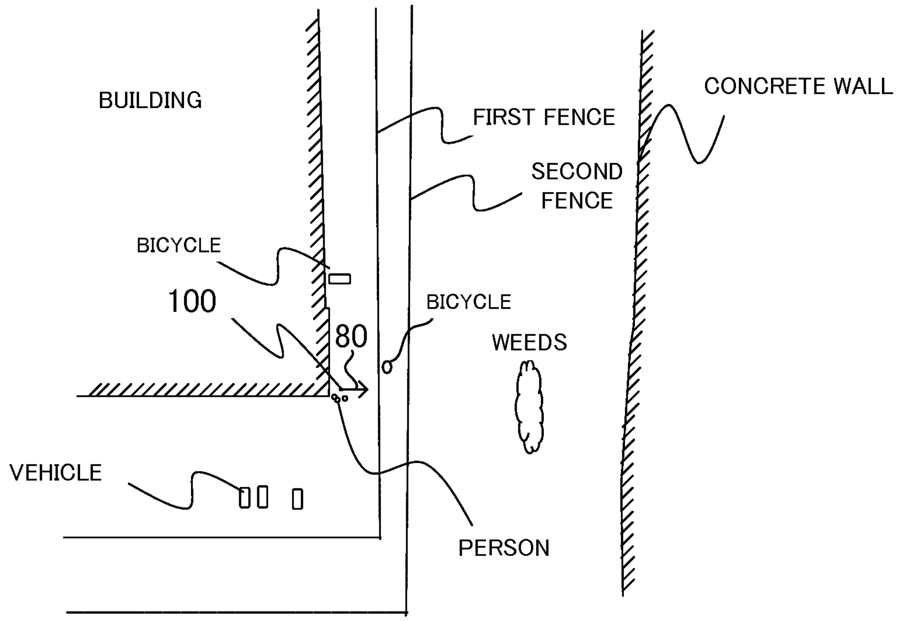
BUILDING
FIRST FENCE
CONCRETE WALL
SECOND FENCE
BICYCLE
100
80
BICYCLE
WEEDS
VEHICLE
PERSON

FIG. 5B

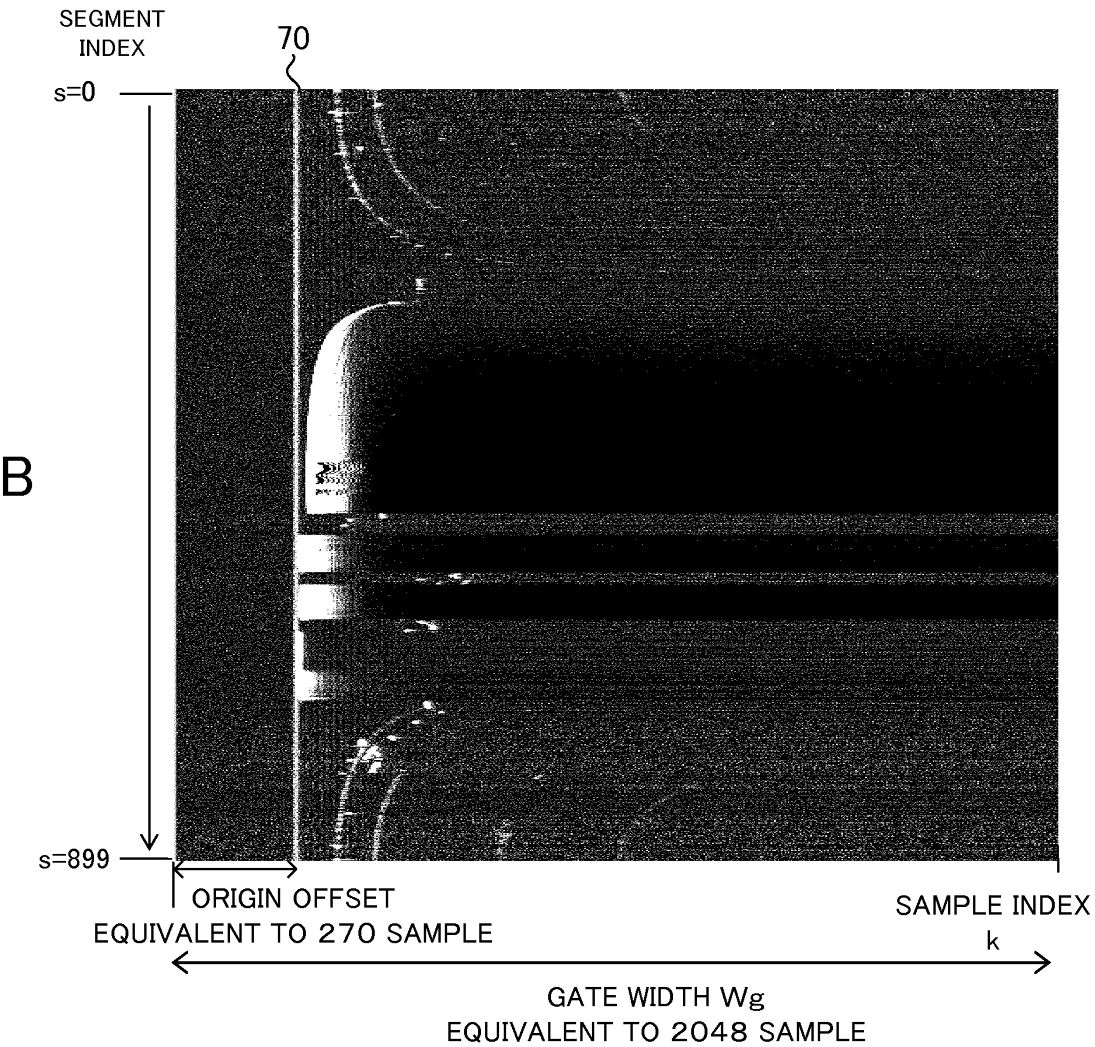
SEGMENT INDEX
70
s=0
s=899
ORIGIN OFFSET
EQUIVALENT TO 270 SAMPLE
SAMPLE INDEX
k
GATE WIDTH Wg
EQUIVALENT TO 2048 SAMPLE

FIG. 6

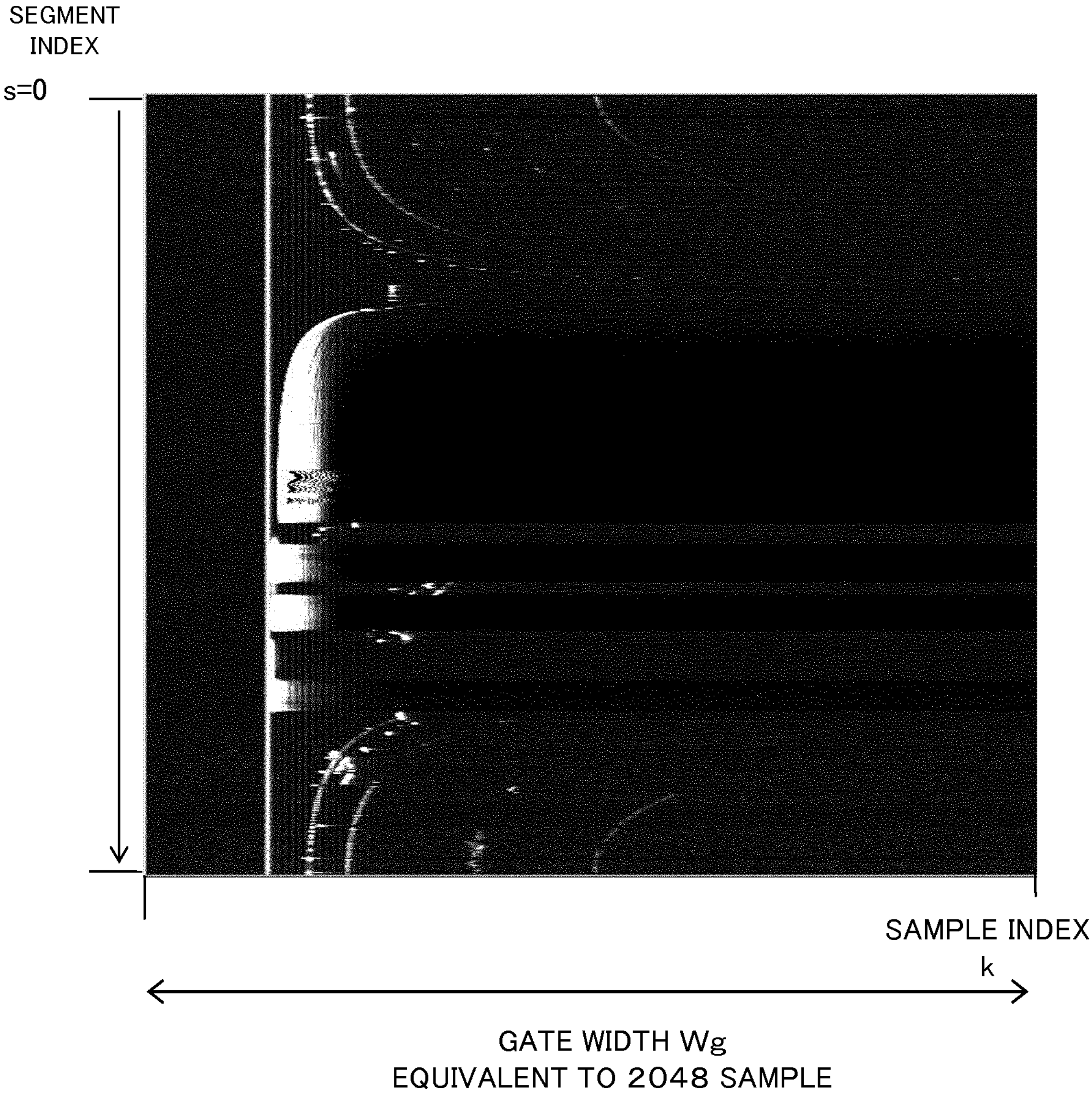
SEGMENT INDEX
s=0
SAMPLE INDEX
k
GATE WIDTH Wg
EQUIVALENT TO 2048 SAMPLE

FIG. 7

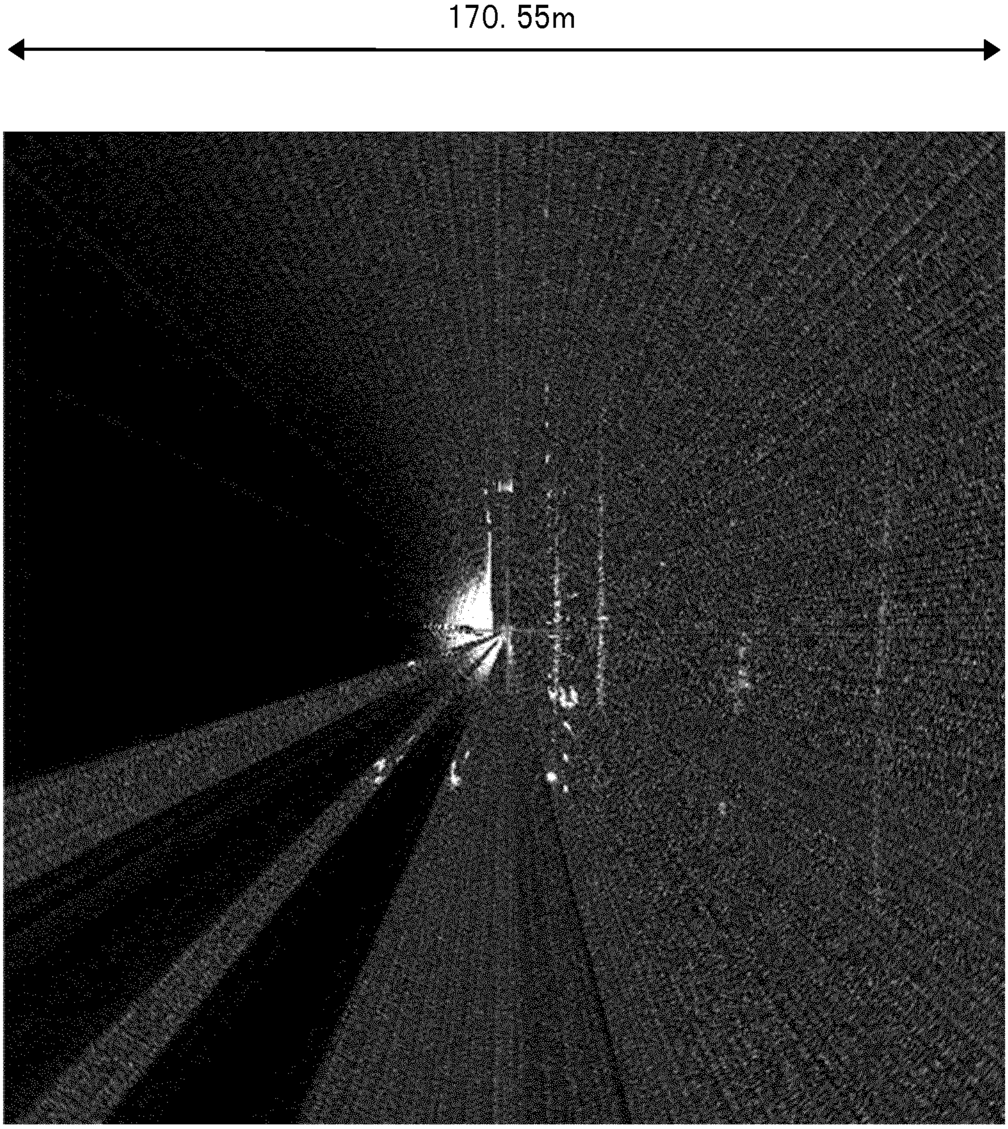

FIG. 8

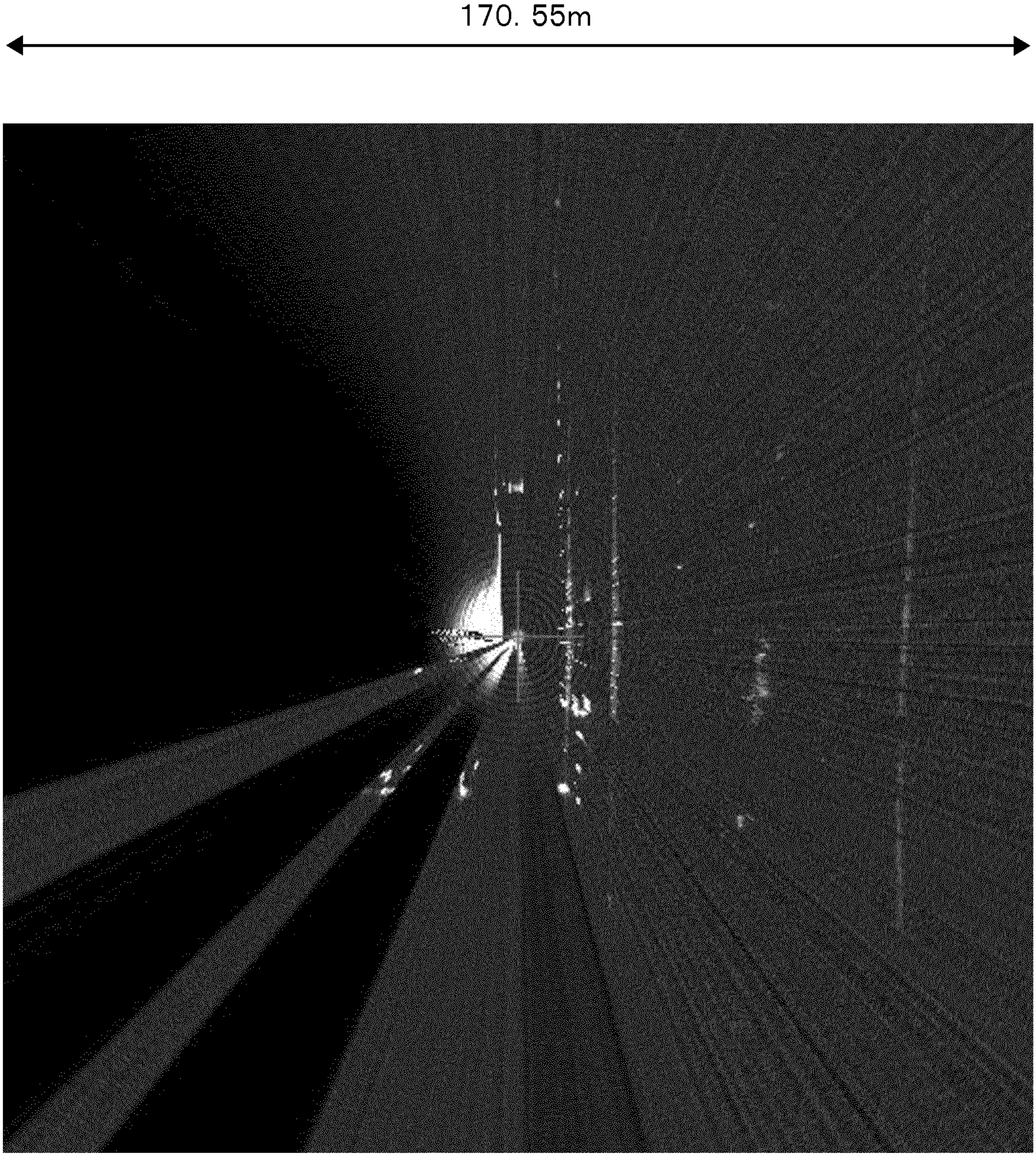

FIG. 9A

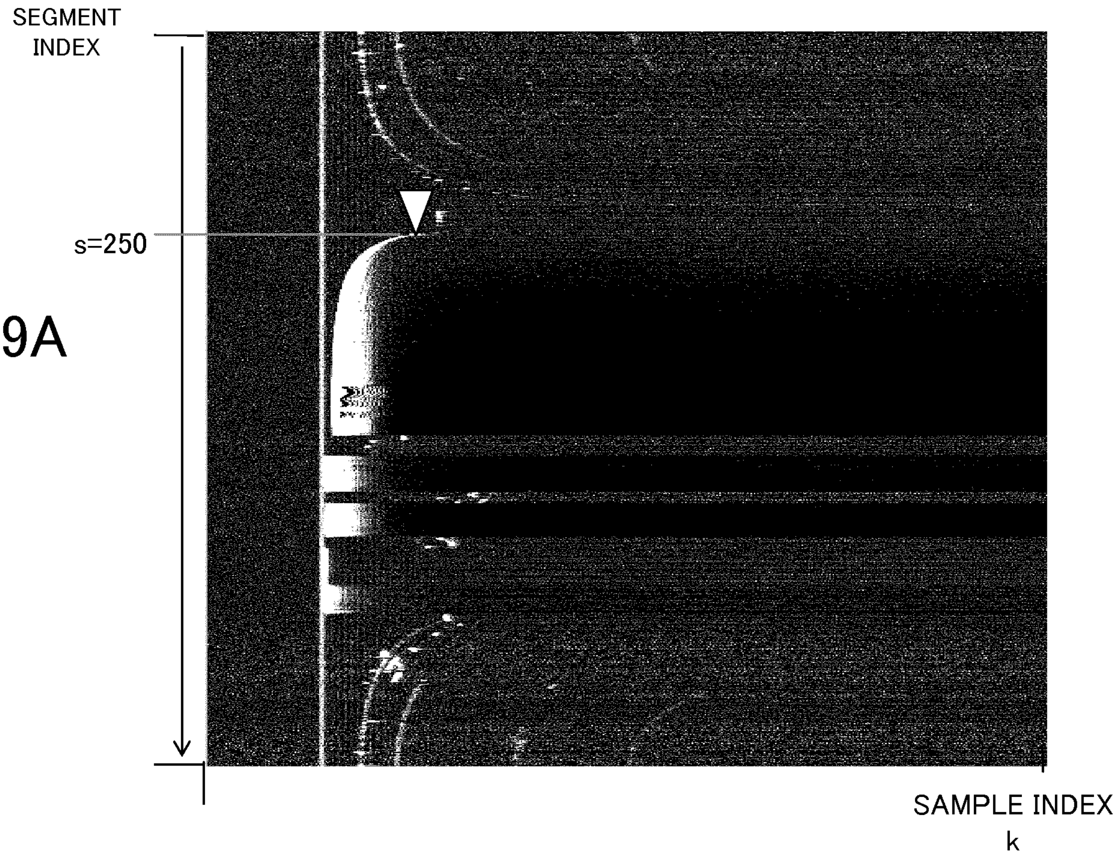


FIG. 9B

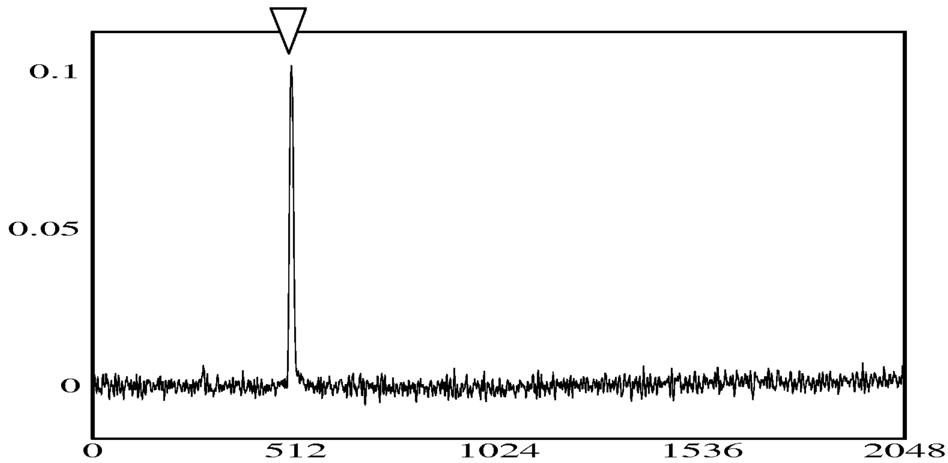


FIG. 9C

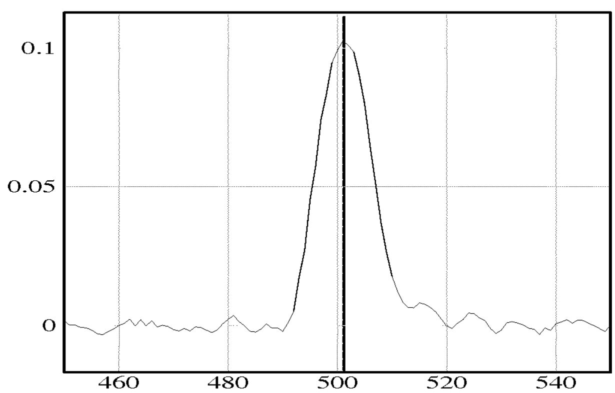

FIG. 10A

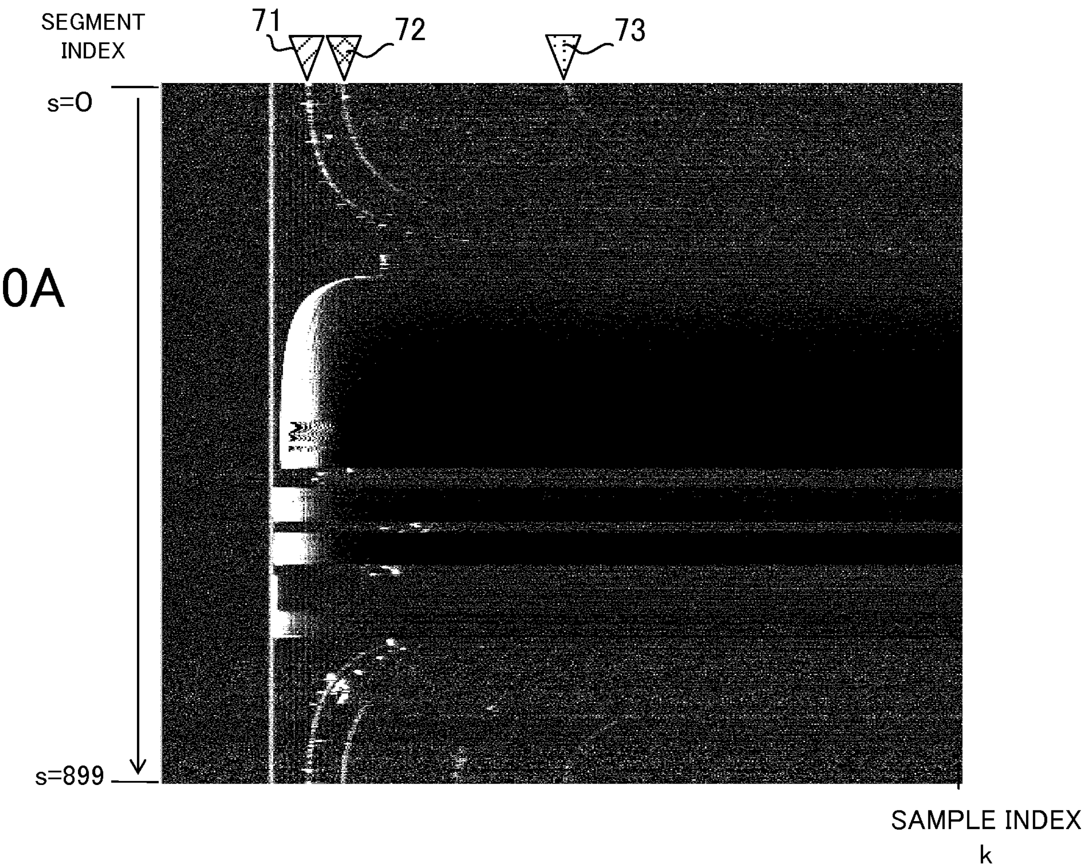


FIG. 10B

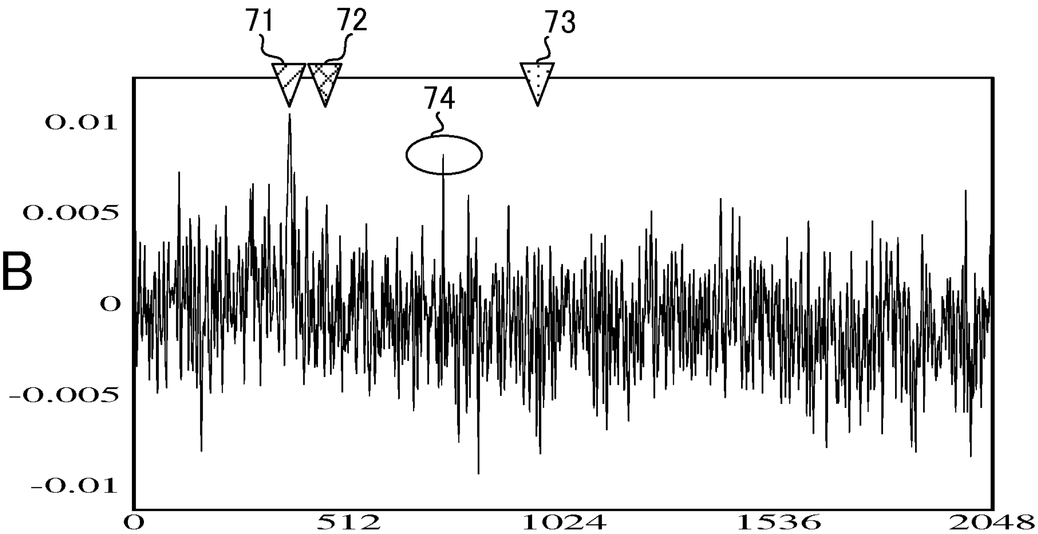

FIG. 11

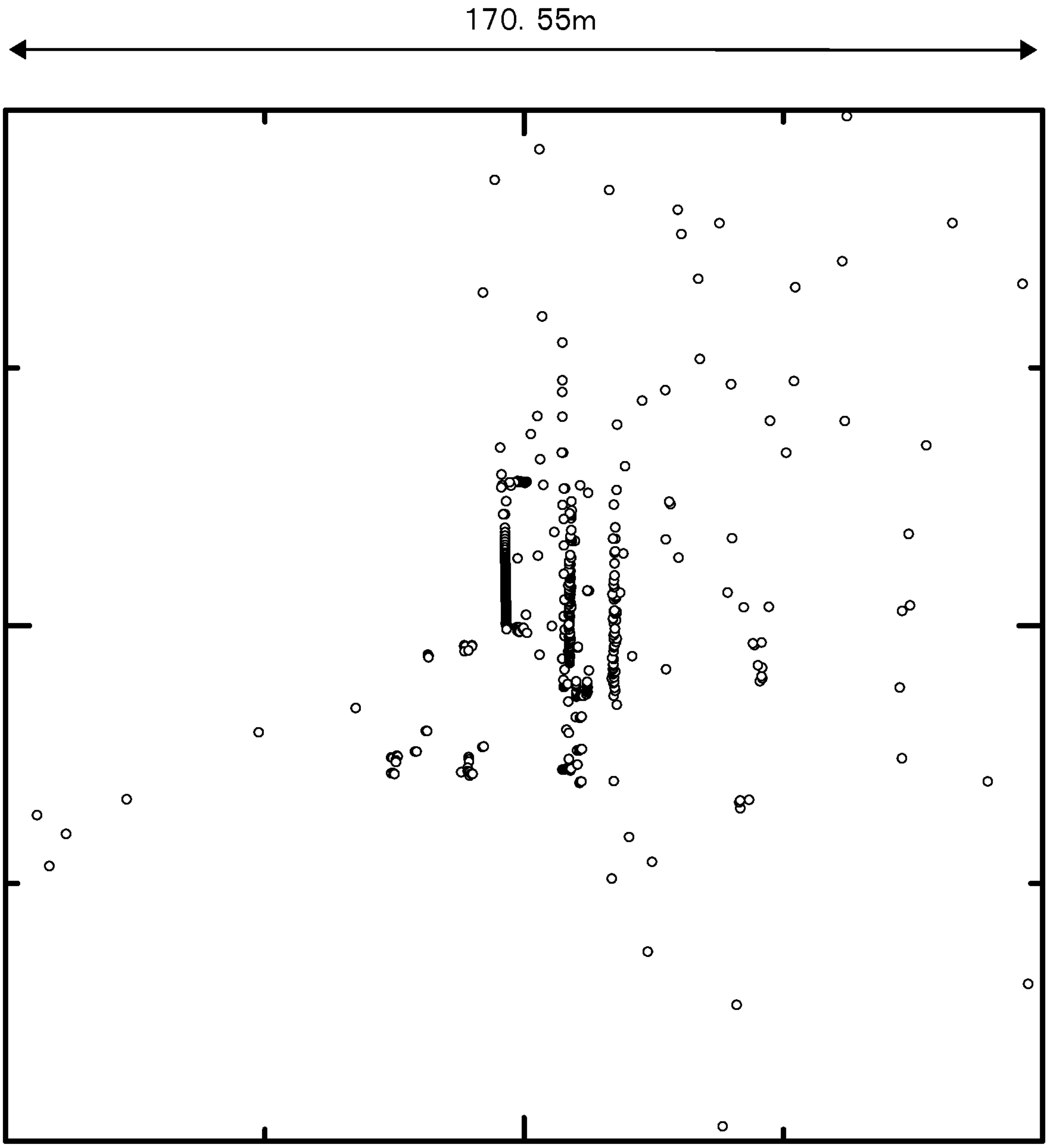

FIG. 12

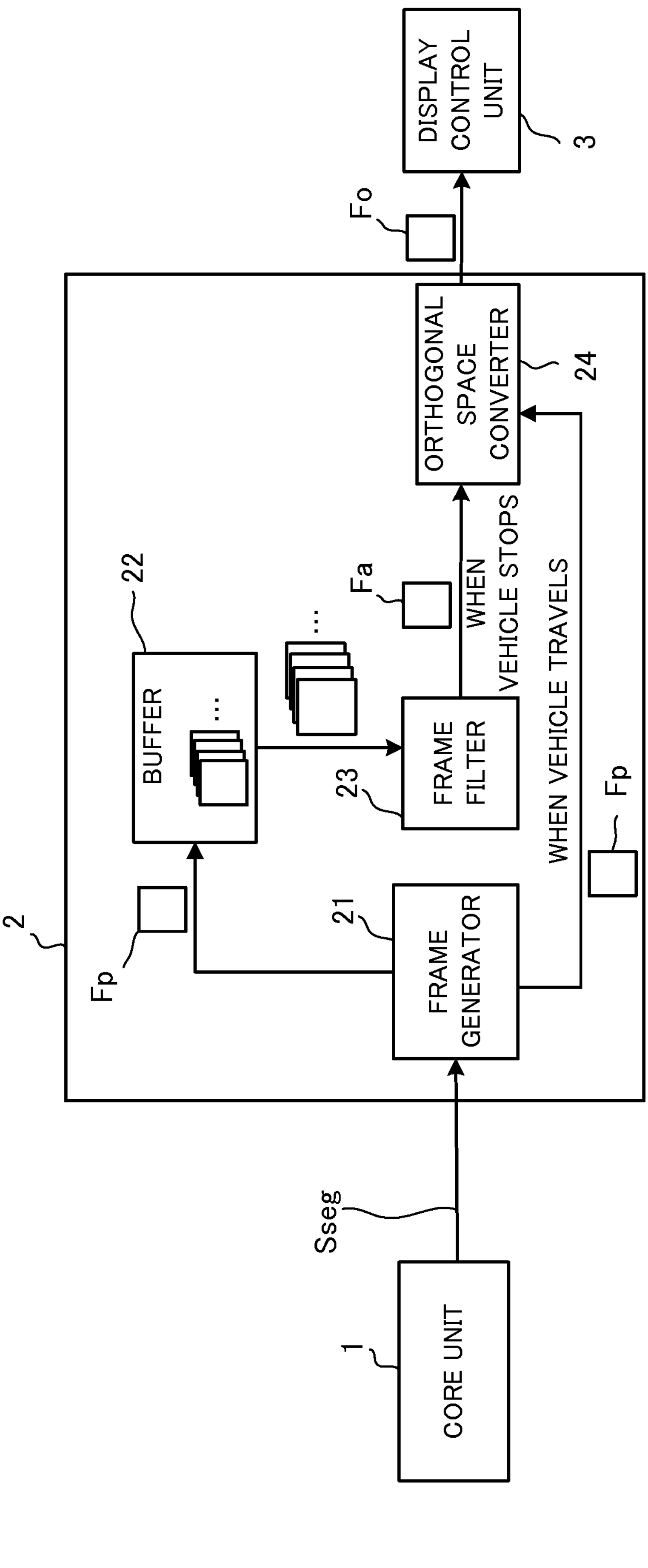

CORE UNIT
1
Sseg
2
FRAME GENERATOR
21
Fp
BUFFER
22
FRAME FILTER
23
Fa
WHEN VEHICLE STOPS
WHEN VEHICLE TRAVELS
Fp
ORTHOGONAL SPACE CONVERTER
24
Fo
DISPLAY CONTROL UNIT
3

## INTERNATIONAL SEARCH REPORT

International application No.
PCT/JP2015/074685

**A. CLASSIFICATION OF SUBJECT MATTER**
*G01S7/487*(2006.01)i, *G01S17/89*(2006.01)i

According to International Patent Classification (IPC) or to both national classification and IPC

**B. FIELDS SEARCHED**

Minimum documentation searched (classification system followed by classification symbols)
G01S7/487, G01S17/89

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | CD-ROM of the specification and drawings annexed to the request of Japanese Utility Model Application No. 14937/1993(Laid-open No. 74981/1994) (NEC Home Electronics Ltd.), 21 October 1994 (21.10.1994), paragraph [0002]; examples; fig. 1 to 4 (Family: none) | 1,2,8-12<br>3-7 |
| Y | JP 2001-183462 A (Honda Motor Co., Ltd.), 06 July 2001 (06.07.2001), paragraphs [0034] to [0039]; mode for carrying out the invention; all drawings (Family: none) | 3-5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 November 2015 (16.11.15) | 24 November 2015 (24.11.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

INTERNATIONAL SEARCH REPORT

International application No. PCT/JP2015/074685

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2012-185039 A (Fujitsu Ten Ltd.), 27 September 2012 (27.09.2012), paragraph [0006]; all drawings & DE 102012203172 A1 | 4,5 |
| Y | JP 2000-137076 A (Denso Corp.), 16 May 2000 (16.05.2000), paragraphs [0046] to [0049]; all drawings & US 6393377 B1 column 6, line 55 to column 7, line 47; all drawings & DE 19952552 A1 | 6 |
| Y | JP 2009-288055 A (Ishikawajima Transport Machinery Co., Ltd.), 10 December 2009 (10.12.2009), entire text; fig. 1, 3 (Family: none) | 7 |
| A | JP 2012-198730 A (Denso Corp.), 18 October 2012 (18.10.2012), paragraph [0025]; Mode for carrying out the invention; fig. 1 & US 2012/0271483 A1 paragraph [0108]; DETAILED DESCRIPTION OF THE PREFERRED EMBODIMENTS; fig. 1 & DE 102012204441 A & CN 102693645 A | 1-12 |
| A | JP 2005-233716 A (Omron Corp.), 02 September 2005 (02.09.2005), entire text; all drawings & US 2005/0179581 A1 entire text; all drawings & EP 1566659 A1 & CN 1657971 A | 1-12 |
| A | JP 2014-106854 A (Toyota InfoTechnology Center, Co., Ltd.), 09 June 2014 (09.06.2014), entire text; all drawings (Family: none) | 1-12 |

Form PCT/ISA/210 (continuation of second sheet) (July 2009)

**INTERNATIONAL SEARCH REPORT**

International application No.
PCT/JP2015/074685

Subject to be covered by this search:

(1) The statement that "the first information processing unit changes the bandwidth of the filtering and the predetermined duration according to the moving speed of the mobile object" is an incorrect Japanese expression in which two objects exist, and is unclear since it is not clear whether an object to be changed is "the predetermined duration" or "the bandwidth of the filtering".

However, if the statements of the description and the drawings are taken into consideration, a correction for limiting the above statement to the aspect of changing "the predetermined duration" by deleting "the bandwidth of the filtering" is rationally predictable, and therefore the above claim is not subject to exception.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014106854 A